(19) Europäisches Patentamt
European Patent Office
Office européen des brevets

(11) **EP 4 786 749 A1**

(12) **EUROPEAN PATENT APPLICATION**

(43) Date of publication:
05.08.2026 Bulletin 2026/32

(21) Application number: 25222354.0

(22) Date of filing: 10.12.2025

(51) International Patent Classification (IPC):
**F01D 21/00** (2006.01)

(52) Cooperative Patent Classification (CPC):
**F01D 21/003; F01D 17/085; F01D 21/12; F02C 3/04; F02C 9/00; F02C 9/28; G01M 15/14;** F05D 2220/323; F05D 2260/80; F05D 2260/821; F05D 2270/303; F05D 2270/335; F05D 2270/44; F05D 2270/708; F05D 2270/71

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.12.2024 US 202418977602**

(71) Applicant: **Pratt & Whitney Canada Corp.**
**(01BE5) Longueuil, QC J4G 1A1 (CA)**

(72) Inventor: **CLOUTIER, Yves**
**(01BE5) Longueuil, J4G 1A1 (CA)**

(74) Representative: **Dehns**
**10 Old Bailey**
**London EC4M 7NG (GB)**

(54) **T6 PROBES ACCURACY BASED ON SWIRL ANGLE**

(57) A method for improvement of T6 probes accuracy based on swirl angle includes predicting a swirl angle of a gas turbine engine (102a, 102b) based on a power of the gas turbine engine (102a, 102b) and a delta value. The method includes determining an error value of an exhaust temperature (T6) of the gas turbine engine (102a, 102b) based on the predicted swirl angle and a correlation function (400) of swirl angle to error. Also, the method includes compensating a measured value of the T6 based on the error value.

FIG. 4

ERROR BETWEEN T6 DATA REDUCTION AND T6 FADEC

HIGH POWER CORRESPONDS TO SWIRL ANGLE ABOVE ZERO

LINE IS THE COMPENSATION CURVE IN THE FADEC

**Description**

TECHNICAL FIELD

This disclosure relates generally to gas turbine engine systems. More specifically, this disclosure relates to improvement of T6 probes accuracy based on swirl angle.

BACKGROUND

Some aircraft include a gas turbine engine. An open-rotor gas turbine engine can be turboshaft engine or a turboprop engine. A helicopter is an example of a rotorcraft that includes turboshaft engine. A turboprop engine can be referred to as a turbo propulsor engine, which does not have a nacelle, but instead has an open blade design. For example, it is common for regional, short-distance aircraft or an aircraft built during the 1940s to have a propeller out front on the engine.

The exhaust from the engine is commonly referred to as station six (6), and the temperature at station 6 is referred to as T6. Temperature sensors, such as thermocouples, are used measure the temperature of discharged gases. Various conditions can affect the accuracy of temperature readings from temperature sensors. To improve accuracy, a temperature value adjustment referred to as an inter-stage turbine temperature (ITT) trim value is obtained during a testing phase of an engine to compensate for mechanical variations in the gas path of that engine. The ITT trim value may vary from engine to engine, but once determined for a particular engine, is physically stamped on the label plate of an engine. Historically, the ITT trim is a fixed value that does not change relative to swirl angle - meaning the ITT trim is a constant or scalar.

SUMMARY

This disclosure relates to systems and methods for improvement of T6 probes accuracy based on swirl angle.

In an aspect of the present invention, a method includes predicting a swirl angle of a gas turbine engine based on a power of the engine and a delta value. The method includes determining an error value of an exhaust temperature (T6) of the engine based on the predicted swirl angle and a correlation function of swirl angle to error. Also, the method includes compensating a measured value of the T6 based on the error value.

In another aspect of the present invention, an electronic device includes a processor configured to predict a swirl angle of a gas turbine engine based on a power of the engine and a delta value. The processor is configured to determine an error value of an exhaust temperature (T6) of the engine based on the predicted swirl angle and a correlation function of swirl angle to error. The processor is configured to compensate a measured value of the T6 based on the error value. In another aspect, the present invention includes a system comprising the gas turbine engine, the electronic device and one or more sensors which may be configured to measure a power delivered to a propulsor blade of the engine and/or a shaft of the engine.

In another aspect of the present invention, a non-transitory machine-readable medium may include instructions that, when executed, cause at least one processor to predict a swirl angle of a gas turbine engine based on a power of the engine and a delta value. The non-transitory machine-readable medium may further include instructions that when executed cause the at least one processor to determine an error value of an exhaust temperature (T6) of the engine based on the predicted swirl angle and a correlation function of swirl angle to error. The non-transitory machine-readable medium may further include instructions that, when executed, cause the at least one processor to compensate a measured value of the T6 based on the error value.

Any single one or any combination of the following features may be used with the any of the above examples. Some examples further include obtaining the power of the engine from a sensor configured to measure a power delivered to a propulsor blade of the engine, wherein the engine includes a turboprop engine. Some examples further include obtaining the power of the engine from a sensor configured to measure a power delivered to a shaft of the engine, wherein the engine includes a turboshaft engine. In some examples, the error value is equivalent to a difference between the measured value of the T6 and a reference value, and the reference value is a T6 measured in a test cell. In other words, the error value is the difference between real T6 and measured T6, where the real T6 is a reference value measured in the test cell.

Some examples further include determining whether the swirl angle is in a range of angles corresponding to a constant inter-stage turbine temperature (ITT) trim. In response to a determination that the swirl angle is in the range of angles, a determination is made that the error value of the T6 is the constant ITT trim. In response to a determination that the swirl angle is not in the range of angles, a determination is made that the error value of the T6 is a variable ITT trim that varies with respect to swirl angle.

In some examples, compensating the measured value of the T6 comprises determining a corrected value of the T6 as a sum of the error value and the measured value. In response to a determination the corrected value of the T6 is greater than a threshold value, the corrected value of the T6 is determined as the sum of the error value and the measured value. In response to a determination the corrected value of the T6 is not greater than the threshold value, the corrected value of the T6 is determined as a sum of the error value and the threshold value.

Other technical features may be readily apparent to one skilled in the art from the following figures, descriptions, and claims.

BRIEF DESCRIPTION OF THE DRAWINGS

For a more complete understanding of this disclosure and its advantages, reference is now made to the following description taken in conjunction with the accompanying drawings, in which like reference numerals represent like parts:

> FIGURE 1 illustrates an example aircraft supporting systems and methods for improvement of T6 probes accuracy based on swirl angle in accordance with this disclosure;
> FIGURE 2 illustrates an example computing device or system supporting systems and methods for improvement of T6 probes accuracy based on swirl angle in accordance with this disclosure;
> FIGURES 3A and 3B each illustrate example computer programming code for improvement of T6 probes accuracy based on swirl angle in accordance with this disclosure;
> FIGURE 4 illustrates a correlation function of gas turbine engine exhaust temperature (T6) error with respect to swirl angle in accordance with this disclosure; and
> FIGURE 5 illustrates a method for improvement of T6 probes accuracy based on swirl angle in accordance with this disclosure.

DETAILED DESCRIPTION

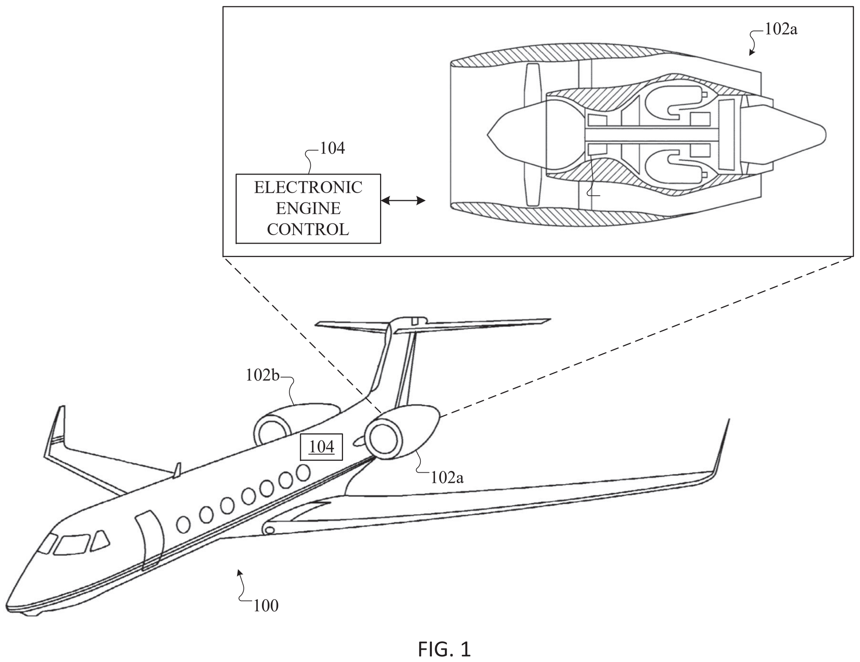

FIGURES 1 through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

For turboshaft and turboprop gas turbine engines that have an open-rotor, the swirl angle can increase with altitude and power. An increasing swirl angle can cause accuracy of T6 to decrease. If swirl angle is too high, then T6 could be erroneous. During testing experiments on the altitude test facility, it was possible to correlate T6 error using other instruments. For turboshaft and turboprop engines, it was noticed the T6 accuracy decreased with engine power and altitude. For example, swirl angle can be correlated with engine power and "delta." Other correlations are possible. In this disclosure, the test facility can be referred to as a test cell.

In this disclosure, "delta" refers to a ratio of measured pressure (P1) to standard ambient pressure (Pstd). Often, delta of an ambient pressure refers to a ratio of a measured ambient pressure (Pamb) to the standard ambient pressure, as shown in Equation 1, where the standard ambient pressure (Pstd) at sea level is 14.696 psia (101.3 kPa). In some cases, at high altitudes, pressure is approximately 2 psia (13.8 kPa).

$$\Delta = \frac{P_{AMB}}{P_{STD}} = \frac{P_{AMB}}{14.696} \qquad (1)$$

This disclosure provides embodiments that include a methodology based on test correlation data is implemented to compensate T6 measurements based on the swirl angle. That is, swirl angle is derived from engine power (for example, shaft horse power (SHP)) and delta, and then the swirl angle is used to determine a T6 correction adder. The T6 correction adder can be referred to as an error value of an exhaust temperature (T6) of the gas turbine engine. This error value represents inaccuracy of the temperature sensor, because other instrumentation indicated different temperatures. In some embodiments, to determine the T6 correction adder, a look up table (LUT) relates the swirl angle to a corresponding T6 correction adder. In some embodiments, T6 correction adder is calculated based on a correlation function that is a function of swirl angle, by inputting the derived swirl angle into the correlation function.

The correction (for example, the T6 correction adder) set forth in this disclosure is really important because the data reduction and calculation of many (for example, all) non-recorded engine parameters during a test are based on the T6 measurement that is the temperature measured downstream of the low pressure turbine (LPT) exit. The T6 correction in this disclosure provides more accurate data reduction and dev/field engine performance calculations. Particularly, when the engine is operated in the test cell, the engine is equipped with probes (also referred to as sensors or engine probes) that are the same as the probes that the engine equipped with when the engine is operating in production on an aircraft. When the engine is operated in the test cell, the engine is additionally equipped with other probes, referred to as test cell facilities probes, that measure the same quantity (or same phenomena) as the engines probes but are more accurate to perform a better sampling measurement. Sometimes the engine is equipped with more test cell facilities probes than engine probes in order to perform a better sampling. For example, an engine could have M T6 engine probes, but in the test cell, the engine can be additionally equipped with N T6 probes (namely, test cell facilities probes) for better accuracy. The M represents a number that can be one or multiple, while the N represents a number that can be greater than or many more than M. In the test cell, some test cell facilities probes are added to the engine to measure a quantity that is not measured on the aircraft, for example, a quantity that engine probes do not measure. All the above-described measurements feed a data reduction model (such as software) that will enables the quantity that is not measured directly by a probe to be determined. As an example of data reduction, when probes do not directly measure the temperature at station 41 (T41), yet the probes do directly measure inlet mass flow, fuel flow, and temperature at station 3 (T3), then the data reduction model can the compute T41 based on the directly measured mass flow, fuel flow, and T3.

FIGURE 1 illustrates an example aircraft supporting systems and methods for improvement of T6 probes accuracy based on swirl angle in accordance with this disclosure. As shown in FIGURE 1, the aircraft 100 represents an airplane having multiple engines 102a-102b, where at least one engine 102a is positioned on one side of the aircraft 100 and at least one engine 102b is positioned on the opposite side of the aircraft 100. Note that the form of the aircraft 100 shown in FIGURE 1 is for illustration only and that the aircraft 100 may have any other suitable form. As one example, the gas turbine engines 102a-102b of the aircraft 100 may be positioned on the wings of the aircraft 100 rather than towards the rear of the aircraft. As another example, while the aircraft 100 in this example has two engines 102a-102b, the aircraft 100 may have any other numbers of engines, such as when two or more engines are positioned on different sides of the aircraft 100. In the case that the aircraft has an open-rotor, these gas turbine engines 102a-102b can be turboprop engines. In the case that the aircraft is a helicopter, these gas turbine engines 102a-102b can be turboshaft engines.

As described in more detail below, the engines 102a-102b can be associated with an electronic engine control (EEC) system or a flight management system (FMS) (EEC/FMS) 104 of the aircraft 100. The EEC/FMS 104 may be implemented using one or more processing devices, such as one or more microprocessors, microcontrollers, digital signal processors (DSPs), application specific integrated circuits (ASICs), field programmable gate arrays (FPGAs), or discrete circuitry. This disclosure does not limit the EEC/FMS 104 to any particular type of device or system. In some embodiments, the EEC/FMS 104 may include or implement systems and methods for improvement of T6 probes accuracy based on swirl angle, such as one or more the engines 102a-102b.

Although FIGURE 1 illustrates one example of an aircraft 100 supporting systems and methods for improvement of T6 probes accuracy based on swirl angle, various changes may be made to FIGURE 1. For example, as noted above, the form of the aircraft 100 and the positions of the engines 102a-102b on the aircraft 100 can vary depending on the implementation. Also, any suitable system or subsystem of the aircraft 100 may benefit from or use the disclosed techniques for improvement of T6 probes accuracy based on swirl angle.

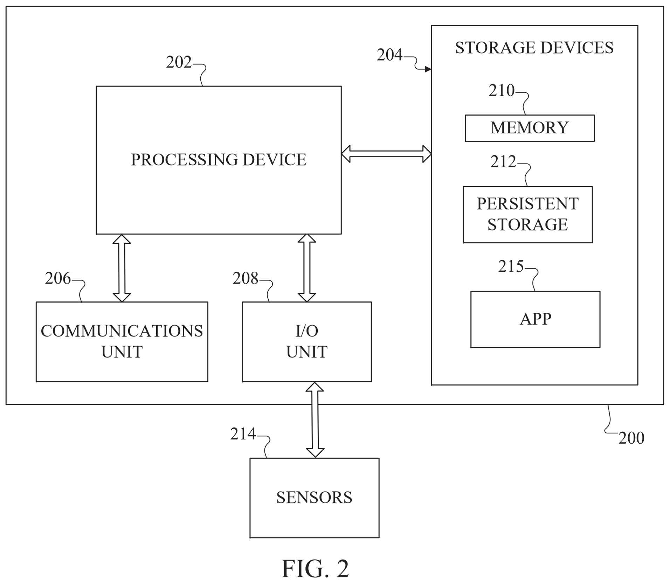

FIGURE 2 illustrates an example computing device or system supporting systems and methods for improvement of T6 probes accuracy based on swirl angle in accordance with this disclosure.

As shown in FIGURE 2, the computing device or system 200 may include at least one processing device 202, at least one optional storage device 204, at least one communications unit 206, and at least one optional input/output (I/O) unit 208. The processing device 202 may execute instructions that can be loaded into a memory 210 or other location that is local to the processing device 202. The processing device 202 includes any suitable number(s) and type(s) of processors or other processing devices in any suitable arrangement. Example types of processing devices 202 include one or more microprocessors, microcontrollers, digital signal processors (DSPs), ASICs, FPGAs, or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, Flash memory, or optical disc.

The communications unit 206 supports communications with other systems or devices. The communications unit 206 may support communications through any suitable physical or wireless communication link(s), such as a network or dedicated connection(s).

The I/O unit 208 allows for input and output of data (such as input from sensors 214). For example, the I/O unit 208 may provide a connection for user input through a keyboard, mouse, keypad, touchscreen, or other suitable input device. The I/O unit 208 may also send output to a display or other suitable output device. Note, however, that the I/O unit 208 may be omitted if the computing device or system 200 does not require local I/O, such as when the computing device or system 200 represents a server or other component that can be accessed remotely over a network.

Although FIGURE 2 illustrates one example of a computing device or system 200 supporting systems and method for improvement of T6 probes accuracy based on swirl angle according to this disclosure, various changes may be made to FIGURE 2. For example, computing devices and systems come in a wide variety of configurations, and FIGURE 2 does not limit the EEC/FMS 104 of FIGURE 1 to any particular computing device or system. The application 215, when executed, enables the device or system 200 to perform the functions for improvement of T6 probes accuracy based on swirl angle as described in this disclosure.

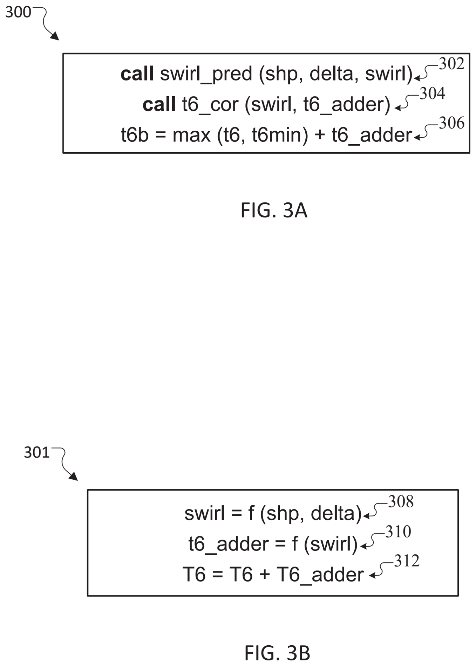

FIGURE 3A illustrates example computer programming code 300 for improvement of T6 probes accuracy based on swirl angle in accordance with this disclosure. FIGURE 3B illustrates example computer programming code 301 for improvement of T6 probes accuracy based on swirl angle in accordance with this disclosure.

Referring to FIGURE 3A, the computer programming code 300 includes instructions to call a swirl prediction function at line 302, to call a correlation function at line 304, and to display a compensated/corrected value of the exhaust temperature at line 306.

At line 302, the swirl prediction function predicts a swirl angle based on engine power (SHP) and delta. In some embodiments, the swirl prediction function predicts a swirl angle based on engine power, delta, and a measured swirl angle.

At line 304, a correlation function determines an error value (T6_ADDER) of an exhaust temperature of the engine that corresponds to the predicted swirl angle. The error value is determined based on a determination result that the predicted swirl angle is inside or outside a range of angles corresponding to a constant inter-stage turbine temperature (ITT) trim. The constant ITT trim does not vary with respect to swirl angle.

At line 306, a display is shown to the pilot of the aircraft 100, and the cockpit display presents a displayable temperature (T6B) that is the exhaust temperature after compensation/correction. The displayable temperature can be a sum of the error value and a threshold value (T6min) when the engine is parked. The threshold value (T6min) can be a minimum exhaust temperature value. When aircraft 100 is parked, the engine 102 is not operating at temperature high enough to trigger an alert to the pilot that the T6 is near to or at an over temperature range. Accordingly, when the aircraft 100 is parked, then there no need to show such low T6 value to the pilot. Alternatively, when the engine 102 is not parked (i.e., in motion), compensating a measured value of the T6 is performed based on the error value (T6_ADDER).

Referring to FIGURE 3B, the computer programming code 301 includes instructions to call a swirl prediction function at line 308, to call a correlation function at line 310, and to display a compensated/corrected value of the exhaust temperature at line 312. The lines 308-312 of the computer programming code 301 shown in FIGURE 3B can be the same as or similar to the corresponds lines 302-306 of the computer programming code 300 shown in FIGURE 3A. It will be understood that, in some embodiments, a scalar rather than an adder can be used in one or both of the computer program code 300 and 301.

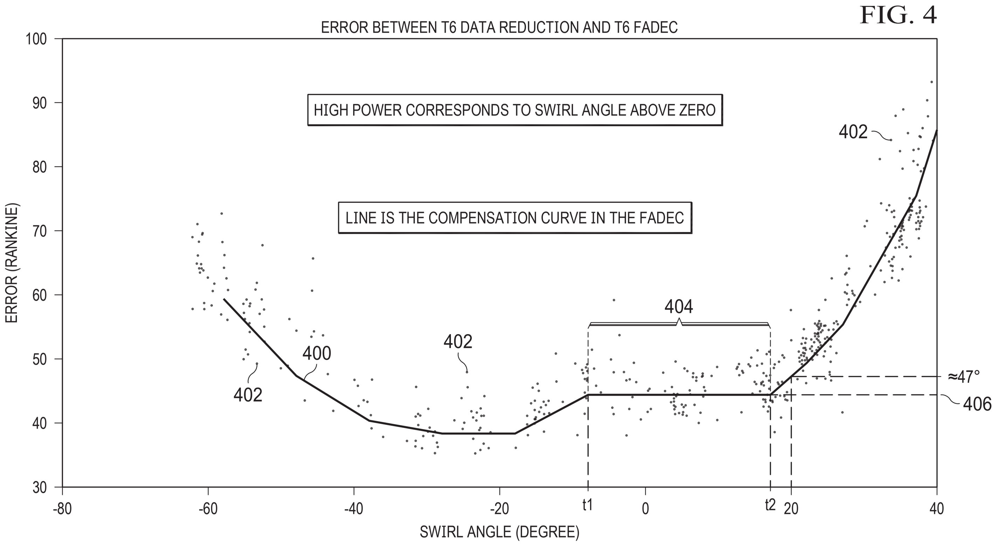

FIGURE 4 illustrates a correlation function 400 of gas turbine engine exhaust temperature (T6) error with respect to swirl angle in accordance with this disclosure. The x-axis represents swirl angle, which can be measured in degrees. The y-axis represents error, which can be measured in units of Rankine, which is a unit of measure of temperature, where $°R = K \times 9/5$. The correlation function 400 can be referred to as correlation of the error, or as T6 error as a function of swirl angle.

Many data points 402 were plotted during testing experiments on the altitude test facility. Each data point 402 represents an error between T6 data reduction and T6 FADEC, for each swirl angle observed (for example, predicted or measured). In other words, the correlation function 400 is a trendline or nonlinear curve representing these data points 402. The correlation function 400 is the compensation curve in the FADEC (for example, stored in the EEC 104 of FIGURE 1). A swirl angle that is above zero corresponds to high power of the engine.

In a range of angles 404, the correlation function 400 has a constant value that does not change with respect to swirl angle. This range of angles 404 from t1 to t2, which can include a 0° swirl angle, a sub-range of negative angles, and a sub-range of positive angles. The "trim" or "ITT trim" of an engine has historically been a fixed value, such as the value ($\approx 44°$) 406 when swirl angle is approximately 0 (i.e., in the range where error does not change relative to swirl angle). The correlation function 400 this disclosure can represent the ITT trim that is not a fixed value, but instead varies with respect to swirl angle. For example, outside of the range of angles 404, the correlation function 400 has a convex shape.

In some embodiments, the correlation function 400 can be biased. The correlation function 400 can represent the error line of engine serial no. 4. But for a different serial number 5, the correlation function 400 shifts up or shift down. For example, a 20° swirl angle for engine having serial no. 4 can corresponds to an error of 47° Rankine ($°R = K \times 9/5$). Due to mechanical variations in the gas path of engine having serial no. 5, the correlation function 400 shifts up by x° such that the 20° swirl angle corresponds to an error of 47°+x° Rankine ($°R = K \times 9/5$). Similarly, due to mechanical variations in the gas path of engine having serial no. 3, the correlation function 400 shifts down by 2x° such that the 20° swirl angle corresponds to an error of 47°+2x° Rankine ($°R = K \times 9/5$).

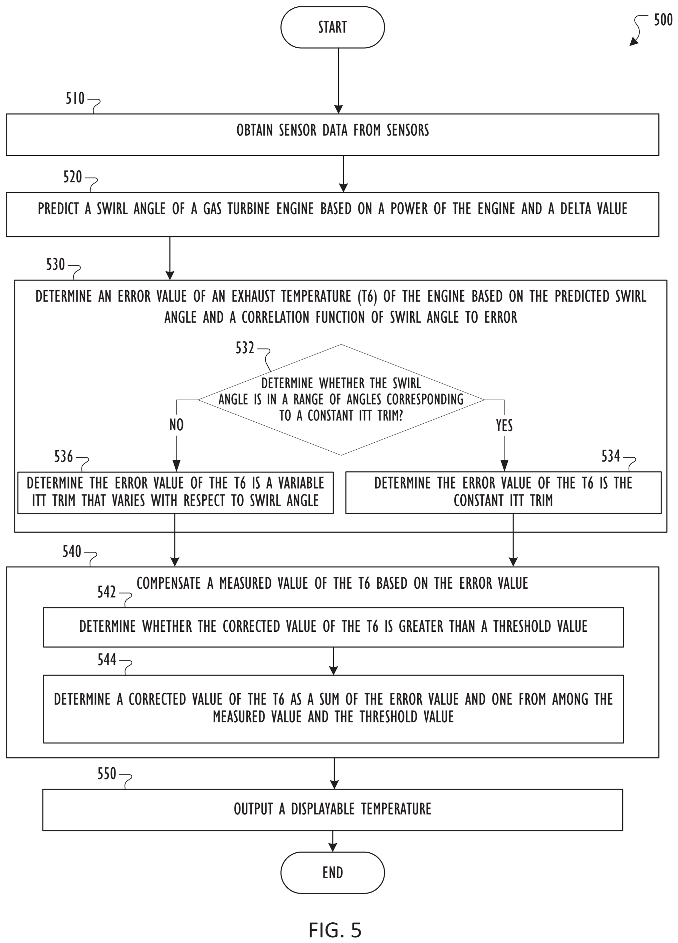

FIGURE 5 illustrates a method 500 for improvement of T6 probes accuracy based on swirl angle in accordance with this disclosure. The method 500 can be implemented by an electronic device, such as the EEC/FMS 104 of FIGURE 1, or the computing device or system 200 of FIGURE 2. More particularly, the method 500 can be performed by a processing device 202 executing the application 215 of FIGURE 2. The application 215 can be a computer program stored in a non-transitory computer readable medium, and the computer program comprises computer readable program code that when executed causes the processing device 202 to execute the method 500 of FIGURE 5. For ease of explanation, the method 500 is described as being performed by the processing device 202.

Referring to the method in FIGURE 5, at block 510, the processing device 202 can obtain sensor data from sensors 214. For example, the processing device 202 can obtain the power (SHP) of the engine from a sensor that is configured to measure a power delivered to a propulsor blade of a turboprop engine. As another example, the processing device 202 can obtain the power (SHP) of the engine from a sensor that is configured to measure a power delivered to a shaft of a turboshaft engine. The sensor data can include temperature measurements from temperature sensors, such as exhaust temperature (T6) at station 6.

At block 520, the processing device 202 can predict a swirl angle of a gas turbine engine based on a power of the engine and a delta value.

At block 530, the processing device 202 can determine an error value of an exhaust temperature (T6) of the engine based on the predicted swirl angle and a correlation function of swirl angle to error. For example, an error value of approximately 47° can be determined as the exhaust temperature T6 of the engine based on a predicted swirl angle of 20° and the correlation function 400 of FIGURE 4. The correlation function 400 relates swirl angle to error.

In some embodiments, the error value (for example, T6_ADDER) is equivalent to a difference between the measured value of the T6 and a reference value. The reference value is a T6 measured in a test cell.

At block 532, the processing device 202 can determine whether the swirl angle is in a range of angles 404 corresponding to a constant inter-stage turbine temperature (ITT) trim. At block 534, in response to a determination that the swirl angle is in the range of angles 404, the processing device 202 can determine the error value of the T6 is the constant ITT trim. At block 536, in response to a determination that the swirl angle is not in the range of angles 404, the processing device 202 can determine the error value of the T6 is a variable ITT trim that varies with respect to swirl angle. For example, the variable ITT trim corresponds to the portion of the correlation function 400 that is outside of range of angles 404.

At block 540, the processing device 202 can compensate a measured value of the T6 based on the error value. To compensate the measured value of the T6, at block 542, the processing device 202 can determine whether the corrected value of the T6 is greater than a threshold value. The threshold value (T6min) can be a minimum exhaust temperature value. At block 544, determine a corrected value of the T6 as a sum of the error value and one from among the measured value and the threshold value. In response to a determination the corrected value of the T6 is greater than a threshold value, the processing device 202 can determine a corrected value of the T6 as a sum of the error value and the measured value. Alternatively, in response to a determination the corrected value of the T6 is not greater than the threshold value, the processing device 202 can determine the corrected value of the T6 as a sum of the error value and the threshold value.

At block 550, the processing device 202 can output a displayable temperature (T6B) to a cockpit display device that the pilot of the aircraft can view. When the aircraft 100 is parked, then the displayable temperature (T6B) is the corrected value of the T6 determined at block 544 as the sum of the error value and the measured value of the T6. Alternatively, when the aircraft 100 is not parked, then the displayable temperature (T6B) is the corrected value of the T6 determined at block 544 as the sum of the error value and the threshold value (T6min).

Although the method 500 can applied to an aircraft that includes a turbofan gas turbine engine, the turbofan engine might exhibit technical benefits that are smaller in magnitude than the benefits exhibited in a turboshaft or turboprop engine. In the case of a turbofan engine, the fan is inside of a nacelle, and is good for long-distance.

Although FIGURE 5 illustrates one example of a method 500 for improvement of T6 probes accuracy based on swirl angle, various changes may be made to FIGURE 5. For example, while shown as a series of steps, various steps in FIGURE 5 could overlap, occur in parallel, occur in a different order, or occur any number of times.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

**Claims**

1. A method includes:

   predicting a swirl angle of a gas turbine engine (102a, 102b) based on a power of the gas turbine engine (102a, 102b) and a delta value;
   determining an error value of an exhaust temperature (T6) of the gas turbine engine (102a, 102b) based on the predicted swirl angle and a correlation function (400) of swirl angle to error; and
   compensating a measured value of the T6 based on the error value.

2. The method of Claim 1, further comprising:

   obtaining the power of the gas turbine engine (102a, 102b) from a sensor configured to measure a power delivered to a propulsor blade of the gas turbine engine (102a, 102b),
   wherein the gas turbine engine (102a, 102b) includes a turboprop engine.

3. The method of Claim 1, further comprising:

   obtaining the power of the gas turbine engine (102a, 102b) from a sensor configured to measure a power delivered to a shaft of the gas turbine engine (102a, 102b),
   wherein the engine includes a turboshaft engine (102a, 102b).

4. The method of Claim 1, 2 or 3, wherein:

   the error value is equivalent to a difference between the measured value of the T6 and a reference value; and
   the reference value is a T6 measured in a test cell.

5. The method of any preceding claim, further comprising:

   determining whether the swirl angle is in a range of angles (404) corresponding to a constant inter-stage turbine temperature (ITT) trim;
   in response to a determination that the swirl angle is in the range of angles (404), determining the error value of the T6 is the constant ITT trim; and
   in response to a determination that the swirl angle is not in the range of angles (404), determining the error value of the T6 is a variable ITT trim that varies with respect to swirl angle.

6. The method of any preceding claim, wherein compensating the measured value of the T6 comprises:
   determining a corrected value of the T6 as a sum of the error value and the measured value.

7. The method of Claim 6, further comprising:

   in response to a determination the corrected value of the T6 is greater than a threshold value, determining the corrected value of the T6 as the sum of the error value and the measured value; and
   in response to a determination the corrected value of the T6 is not greater than the threshold value, determining the corrected value of the T6 as a sum of the error value and the threshold value.

8. An electronic device (200) comprising:
   a processor (202) configured to:

   predict a swirl angle of a gas turbine engine (102a, 102b) based on a power of the gas turbine engine (102a, 102b) and a delta value;
   determine an error value of an exhaust temperature (T6) of the gas turbine engine (102a, 102b) based on the predicted swirl angle and a correlation function (400) of swirl angle to error; and
   compensate a measured value of the T6 based on the error value.

9. The electronic device (200) of Claim 8, wherein the processor (202) is further configured to:

   obtain the power of the gas turbine engine (102a, 102b) from a sensor configured to measure a power delivered to a propulsor blade of the gas turbine engine (102a, 102b),
wherein the gas turbine engine (102a, 102b) includes a turboprop engine.

10. The electronic device (200) of Claim 8, wherein the processor (202) is further configured to:

   obtain the power of the gas turbine engine (102a, 102b) from a sensor configured to measure a power delivered to a shaft of the gas turbine engine (102a, 102b),
   wherein the gas turbine engine includes a turboshaft engine (102a, 102b).

11. The electronic device (200) of Claim 8, 9 or 10, wherein:

   the error value is equivalent to a difference between the measured value of the T6 and a reference value; and
   the reference value is a T6 measured in a test cell.

12. The electronic device (200) of any of Claims 8 to 11, wherein the processor (202) is further configured to:

   determine whether the swirl angle is in a range of angles (404) corresponding to a constant inter-stage turbine temperature (ITT) trim;
   in response to a determination that the swirl angle is in the range of angles (404), determine the error value of the T6 is the constant ITT trim; and
   in response to a determination that the swirl angle is not in the range of angles (404), determine the error value of the T6 is a variable ITT trim that varies with respect to swirl angle.

13. The electronic device (200) of any of Claims 8 to 12, wherein to compensate the measured value of the T6, the processor (202) is further configured to:
   determine a corrected value of the T6 as a sum of the error value and the measured value.

14. The electronic device (200) of Claim 13, wherein the processor (202) is further configured to:

   in response to a determination the corrected value of the T6 is greater than a threshold value, determine the corrected value of the T6 as the sum of the error value and the measured value; and
   in response to a determination the corrected value of the T6 is not greater than the threshold value, determine the corrected value of the T6 as a sum of the error value and the threshold value.

15. A non-transitory computer readable medium embodying a computer program (215), the computer program (215) comprising computer readable program code that when executed causes at least one processor (202) to carry out the method of any of Claims 1 to 7.

FIG. 1

EP 4 786 749 A1

EP 4 786 749 A1

FIG. 2

300

**call** swirl_pred (shp, delta, swirl) ↵ ⌇302
**call** t6_cor (swirl, t6_adder) ↵ ⌇304
t6b = max (t6, t6min) + t6_adder ↵ ⌇306

FIG. 3A

301

swirl = f (shp, delta) ↵ ⌇308
t6_adder = f (swirl) ↵ ⌇310
T6 = T6 + T6_adder ↵ ⌇312

FIG. 3B

FIG. 4

ERROR BETWEEN T6 DATA REDUCTION AND T6 FADEC

HIGH POWER CORRESPONDS TO SWIRL ANGLE ABOVE ZERO

LINE IS THE COMPENSATION CURVE IN THE FADEC

SWIRL ANGLE (DEGREE)

ERROR (RANKINE)

402, 400, 404, 406, ≈47°, t1, t2

```
                              ┌─────────────┐
                              │    START    │
                              └─────────────┘                        ↗ 500
                                     │
  510 ─┐                            ▼
  ┌──────────────────────────────────────────────────────────────────────┐
  │              OBTAIN SENSOR DATA FROM SENSORS                           │
  └──────────────────────────────────────────────────────────────────────┘

  520 ─┐                            │
  ┌──────────────────────────────────────────────────────────────────────┐
  │  PREDICT A SWIRL ANGLE OF A GAS TURBINE ENGINE BASED ON A POWER OF     │
  │  THE ENGINE AND A DELTA VALUE                                          │
  └──────────────────────────────────────────────────────────────────────┘
```

530 — DETERMINE AN ERROR VALUE OF AN EXHAUST TEMPERATURE (T6) OF THE ENGINE BASED ON THE PREDICTED SWIRL ANGLE AND A CORRELATION FUNCTION OF SWIRL ANGLE TO ERROR

532 — DETERMINE WHETHER THE SWIRL ANGLE IS IN A RANGE OF ANGLES CORRESPONDING TO A CONSTANT ITT TRIM?

NO                          YES

536 — DETERMINE THE ERROR VALUE OF THE T6 IS A VARIABLE ITT TRIM THAT VARIES WITH RESPECT TO SWIRL ANGLE

534 — DETERMINE THE ERROR VALUE OF THE T6 IS THE CONSTANT ITT TRIM

540 — COMPENSATE A MEASURED VALUE OF THE T6 BASED ON THE ERROR VALUE

542 — DETERMINE WHETHER THE CORRECTED VALUE OF THE T6 IS GREATER THAN A THRESHOLD VALUE

544 — DETERMINE A CORRECTED VALUE OF THE T6 AS A SUM OF THE ERROR VALUE AND ONE FROM AMONG THE MEASURED VALUE AND THE THRESHOLD VALUE

550 — OUTPUT A DISPLAYABLE TEMPERATURE

END

FIG. 5

Europäisches
Patentamt
European
Patent Office
Office européen
des brevets

## EUROPEAN SEARCH REPORT

Application Number

EP 25 22 2354

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/183916 A1 (CLEARY MARK JAMES [US]) 5 December 2002 (2002-12-05) * paragraphs [0022] - [0026]; figures 1-4 * ----- | 1-15 | INV. F01D21/00 |
| A | US 2013/014514 A1 (ROMIG BRYAN WESLEY [US] ET AL) 17 January 2013 (2013-01-17) * paragraphs [0030] - [0038]; figures 2-4 * ----- | 1-15 | |
| A | CA 3 089 220 A1 (SIEMENS AG [DE]) 6 September 2019 (2019-09-06) * abstract; figures 3-11 * ----- | 1-15 | |

TECHNICAL FIELDS
SEARCHED        (IPC)

F01D

The present search report has been drawn up for all claims

| Place of search | Date of completion of the search | Examiner |
|---|---|---|
| Munich | 5 June 2026 | Avramidis, Pavlos |

EPO FORM 1503 03.82 (P04C01)

## ANNEX TO THE EUROPEAN SEARCH REPORT
## ON EUROPEAN PATENT APPLICATION NO.

EP 25 22 2354

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2026

| Patent document cited in search report | Publication date | Patent family member(s) | | Publication date |
|---|---|---|---|---|
| US 2002183916 A1 | 05-12-2002 | US | 6460346 B1 | 08-10-2002 |
| | | US | 2002183916 A1 | 05-12-2002 |
| US 2013014514 A1 | 17-01-2013 | CN | 102877948 A | 16-01-2013 |
| | | EP | 2546575 A2 | 16-01-2013 |
| | | US | 2013014514 A1 | 17-01-2013 |
| CA 3089220 A1 | 06-09-2019 | CA | 3089220 A1 | 06-09-2019 |
| | | CN | 111771084 A | 13-10-2020 |
| | | EP | 3531019 A1 | 28-08-2019 |
| | | EP | 3759392 A1 | 06-01-2021 |
| | | RU | 2745051 C1 | 18-03-2021 |
| | | US | 2021040899 A1 | 11-02-2021 |
| | | WO | 2019166214 A1 | 06-09-2019 |

EPO FORM P0459

For more details about this annex : see Official Journal of the European Patent Office, No. 12/82